# EUROPÄISCHE PATENTSCHRIFT

(11) **EP 1 982 571 B1**
(45) Veröffentlichungstag und Bekanntmachung des Hinweises auf die Patenterteilung: **21.10.2009**
(21) Anmeldenummer: 08007547.6
(22) Anmeldetag: 18.04.2008
(51) Int. Cl.: A01D 34/76

(54) **Aufsitzrasenmäher mit Mähdeck**
Ride-on lawnmower with mowing covering
Tondeuse avec assise et toit

(30) Priorität: 20.04.2007 DE 102007019155
(43) Veröffentlichungstag der Anmeldung: 22.10.2008
(73) Patentinhaber: AL-KO KOBER AG, D-89359 Kötz (DE)
(72) Erfinder: Zimmermann, Sven, 6323 Bad Häring (AT); Rausch, Bernhard, 86476 Wattenweiler (DE); Kempfle, Thomas, 89346 Bibertal (DE); Sauter, Werner, 89347 Bubesheim (DE)
(74) Vertreter: Binder, Armin

(56) Entgegenhaltungen:
- EP-A- 0 445 623
- DE-U1- 20 307 480
- US-A- 4 068 452
- US-A- 4 813 215
- US-A- 6 120 401

## Beschreibung

Die Erfindung betrifft einen Aufsitzrasenmäher aufweisend einen Antriebsmotor, der direkt oder über ein Getriebe mit einer im Wesentlichen senkrecht stehenden Antriebswelle mit einer Antriebsscheibe angetrieben wird, und ein Mähdeck mit mindestes zwei horizontal um jeweils eine Schneidachse rotierenden Schneidwerkzeugen, die über einen Keilriemenantrieb durch die Antriebskeilriemenscheibe angetrieben werden.

Derartige Mähdecks sind allgemein bekannt. Beispielsweise wird auf die Europäische Patentschrift EP 0 445 623 B1 verwiesen. Diese Patentschrift offenbart ebenfalls einen Aufsitzrasenmäher mit einem Mähdeck, mit einem ersten von einer Kraftquelle angetriebenen Zugmittel zum Antrieb einer verstellbar gelagerten Zugmittelscheibe und einem zweiten mit dem ersten Zugmittel gekuppelten und unter der Wirkung einer Spannvorrichtung stehenden Zugmittel zum Antrieb von Arbeitswerkzeugen, wobei die Zugmittelscheibe über eine eine Feder aufweisende Stellvorrichtung in eine erste Stellung, in der die Zugmittelscheibe das erste Zugmittel spannt, und in eine zweite Stellung verstellbar ist, in der die Wirkung der Feder aufgehoben ist, wobei die Zugmittelscheibe über die Stellvorrichtung über die zweite Stellung hinaus in eine dritte Stellung verstellbar ist. Durch diese Ausführung eines Aufsitzrasenmähers soll die Aufgabe gelöst werden, die Antriebsverbindung zwischen dem Antriebsmotor des Rasenmähers und dem Mähdeck leichter lösen zu können. Hierfür ist vorgesehen, dass die Zugmittelscheibe über die Stellvorrichtung über die zweite Stellung hinaus in eine dritte Stellung verstellbar ist, in der das erste Zugmittel an der Zugmittelscheibe leicht entfernt werden kann.

Bei der hier vorliegenden Erfindung soll grundsätzlich auch ein einfaches Entfernen des Mähdecks vom eigentlichen Aufsitzrasenmäher, also eine Entkopplung zwischen dem Antriebsmotor und dem Mähdeck möglich sein, ohne gleichzeitig den eigentlichen Riemenantrieb für die Schneidwerkzeuge des Mähdecks zu beeinflussen. Jedoch soll zusätzlich gewährleistet werden, dass aus Sicherheitsgründen beim Entspannen der Kopplung zwischen Antriebsmotor und Mähdeck ein langes Nachlaufen der Schneidwerkzeuge vermieden wird und automatisch eine Bremswirkung einsetzt, die die Schneidwerkzeuge schnell und sicher in einen Ruhezustand versetzt.

Grundsätzlich ist aus der Deutschen Gebrauchmusterschrift DE 203 07 480 U1 auch eine Kraftübertragungssituation bei einem Rasenmäher mit einem Keilriemenantrieb bekannt, wobei eine Antriebswelle eine doppelte Keilriemenscheibe über einen Keilriemen antreibt, die wiederum über einen gemeinsamen Keilriemenantrieb eine Welle eines Schneidwerkzeuges antreibt, wobei im entkoppelten Zustand eine Bremse auf die doppelte Keilriemenscheibe wirkt. Bei dieser Art der Kopplung beziehungsweise des Entkoppelns und Bremsens des Antriebes ist es jedoch von Nachteil, dass über einen gemeinsamen Hebel eine Andruckrolle auf den kraftübertragenden Keilriemen zwischen der Antriebswelle und der doppelten Keilriemenscheibe zur Kopplung der Antriebe wirken muss, wodurch sich ein erhöhter Verschleiß für den antreibenden Keilriemen ergibt.

Es ist daher Aufgabe der vorliegenden Erfindung eine Antriebssituation zu finden, welche für den kraftübertragenden ersten Keilriemen im Keilriemenantrieb möglichst schonend wirkt.

Diese Aufgabe wird durch die Merkmale des unabhängigen Patentanspruches gelöst. Vorteilhafte Weiterbildungen der Erfindung sind Gegenstand untergeordneter Ansprüche.

Dementsprechend schlagen die Erfinder einen Aufsitzrasenmäher vor, aufweisend einen Antriebsmotor, ein Mähdeck, das direkt oder über ein Getriebe von einer Antriebswelle mit einer Antriebskeilriemenscheibe angetrieben wird, das Mähdeck mit mindestes zwei horizontal um jeweils eine Schneidachse rotierenden Schneidwerkzeugen, die über einen Keilriemenantrieb durch die Antriebskeilriemenscheibe angetrieben werden, wobei erfindungsgemäß die Antriebskeilriemenscheibe mit Hilfe eines ersten spann- und entspannbaren Keilriemens eine Mehrfachkeilriemenscheibe antreibt, eine Spannvorrichtung vorgesehen ist, welche die Mehrfachkeilriemenscheibe zum Spannen des ersten Keilriemens parallel zu ihrer Drehachse bewegen kann, mindestens ein zweiter Keilriemen vorgesehen ist, welcher die mindestens zwei Schneidwerkzeuge über weitere Keilriemenscheiben antreibt, wobei der zweite Keilriemen permanent auch während des entkoppelten Zustandes zur Antriebskeilriemenscheibe gespannt ist, und eine direkt auf die Mehrfachkeilriemenscheibe wirkende Bremsvorrichtung vorgesehen ist, die auf die Mehrfachkeilriemenscheibe einwirkt, sobald sich die Mehrfachkeilriemenscheibe zum Entspannen des ersten Keilriemens der Antriebskeilriemenscheibe nähert.

Durch diese Ausführung des Keilriemenantriebs des Aufsitzmähers ist es einerseits nicht mehr notwendig eine zusätzliche Spannrolle zum Spannen des ersten Keilriemens für die Kopplung zwischen dem Antriebsmotor und dem Keilriemenantrieb für die Schneidwerkzeuge zu verwenden, wodurch der Keilriemen lediglich mit zwei Keilriemenscheiben in Kontakt kommt und dadurch einem geringeren Verschleiß unterliegt, wobei gleichzeitig eine Bremsvorrichtung vorgesehen ist, die automatisch beim Entspannen des ersten Keilriemens eine zwangsläufige Abbremsung der Schneidwerkzeuge im entkoppelten Zustand bewirkt, wobei gleichzeitig ein einfaches An- und Abmontieren des Mähdecks vom eigentlichen Aufsitzrasenmäher möglich ist, ohne den Keilriemenantrieb für die Schneidwerkzeuge demontieren zu müssen.

In einer vorteilhaften Ausführung ist vorgesehen, dass die Bremsvorrichtung einen federelastisch gelagerten Bremsklotz aufweist, gegen den im Fall einer Entkopplung des Antriebs die Mehrfachkeilriemenscheibe gedrückt wird, wobei weiterhin vorteilhaft der Bremsklotz auf einem exzentrisch um eine Achse und federnd gelagerten Hebelarm (=Bremsfederarm) aufgebracht ist.

Für eine besonders kompakte Bauweise kann vorgesehen werden, dass der Bremsklotz zwischen der Mehrfachkeilriemenscheibe und der Antriebskeilriemenscheibe angeordnet ist. Grundsätzlich ist es hierbei auch besonders vorteilhaft, wenn die Mehrfachkeilriemenscheibe mit keiner separaten Nut für den Bremsklotz ausgestattet sein muss, sondern der Bremsklotz direkt in eine durch einen Keilriemen verwendete Nut, insbesondere in die Nut des ersten Keilriemens, eingreift.

Für ein sicheres Entkoppeln des ersten Keilriemens ist es weiterhin vorteilhaft, wenn im Laufbereich des ersten Keilriemens Begrenzungen vorgesehen sind, welche im entkoppelten Zustand ein Aufrunden und Abspringen des ersten Keilriemens verhindern, das heißt, sobald der erste Keilriemen durch eine Annäherung zwischen Antriebswelle und Mehrfachkeilriemenscheibe entspannt wird, verhindern diese Begrenzungen, dass der Keilriemen in eine entspannte runde Laufform aufgerundet wird, sondern es wird durch diese Begrenzung ein etwa ovaler Verlauf des Keilriemens beibehalten beziehungsweise ein weitgehend paralleler Lauf des Keilriemens erzwungen, so dass auch eine saubere Entkopplung von den Keilriemenscheiben erfolgt. Solche Begrenzungen können beispielsweise einerseits aus einem Bügel bestehen, der einen Sektor der Mehrfachkeilriemenscheibe auf der Höhe des ersten Keilriemens umschließt. Außerdem kann auch eine Begrenzung vorgesehen werden, die aus mindestens einem Stift oder Blech besteht, der den Laufbereich des ersten Keilriemens zwischen den Keilriemenscheiben seitlich begrenzt.

Gemäß einem weiteren Aspekt der vorliegenden Erfindung, der grundsätzlich auch in Verbindung mit einem Rasenaufsitzmäher gemäß dem Stand der Technik verwendet werden kann, schlagen die Erfinder vor, dass die Spannvorrichtung der Mehrfachkeilriemenscheibe aus einem Hebelarm (=Spannhebelarm) besteht, der exzentrisch zur Drehachse der Mehrfachkeilriemenscheibe federnd um eine Schwenkachse gelagert ist und auf dem die Mehrfachkeilriemenscheibe selbst gelagert ist. Durch diese Ausführung ist es möglich, dafür zu sorgen, dass im Fall einer Kopplung des Antriebs mit den Schneidwerkzeugen keine mechanische Verbindung, also eine mechanische Entkopplung, zwischen dem Mähdeck und einer Schaltvorrichtung zur Einschaltung der Schneidwerkzeuge besteht.

Vorteilhaft kann hierbei mindestens eine Feder (=Spannfeder) derart am Spannhebelarm angelenkt werden, dass die mindestens eine Spannfeder die notwendige Spannung zwischen der Antriebskeilriemenscheibe und der Mehrfachkeilriemenscheibe für den ersten Keilriemen aufbringt.

Zusätzlich kann ein Schalthebel zum An- und Entkoppeln der mindestens zwei Schneidwerkzeuge vorgesehen werden, der ein Kniegelenk betätigt, welches an einem weiteren Hebelarm (=Andruckhebelarm) angreift, der den Spannhebelarm betätigt. Erfindungsgemäß kann dieser Andruckhebelarm als doppelter Hebelarm ausgebildet sein.

Des Weiteren kann das Kniegelenk im gespannten Zustand über den Andruckhebelarm den ersten Keilriemen entspannt. Außerdem kann der Andruckhebelarm spannhebelseitig eine Rolle als Drucklager aufweisen. Diese Rolle wird im gekoppelten Zustand vollständig von der Mehrfachkeilriemenscheibe abgehoben, so dass im Betrieb während des Mähens der Schalthebel keinen Kontakt zu möglicher Weise vibrierenden Komponenten des Mähdecks aufweist und somit eine Vibration des Schalthebels bei eingekoppeltem Mähdeck vermieden wird.

Bevorzugt ist weiterhin, dass die Spannfeder eine Zugfeder ist, die einerseits am Spannhebel und andererseits am Doppelhebelarm angelenkt ist.

Gemäß einem weiteren Aspekt der Erfindung, der ebenfalls auch in Verbindung mit einem Aufsitzrasenmäher, wie er ansonsten im Stand der Technik bekannt ist, verwendet werden kann, kann als ersten Sicherheitsmaßnahme zur Vermeidung eines unbeabsichtigten Einschaltens des Mähdecks eine Ausführung verwendet werden, bei der der Schalthebel drehbar ist, ein erster Arm des Kniegelenkes am Schalthebel angelenkt ist, ein zweiter Hebelarm des Kniegelenkes am Andruckhebelarm angelenkt ist und eine erste Rastierung des Kniegelenkes vorgesehen ist, in der das Kniegelenk einrastet, sobald der Kniehebel die Schneidwerkzeuge entkoppelt.

Da auf diese Weise das Kniegelenk eingerastet ist, kann ein unbeabsichtigtes Lösen des Kniehebels nicht erfolgen, so dass lediglich eine bewusste Betätigung des Schalthebels, die über die Rastierung hinausführt, eine Inbetriebnahme der Schneidewerkzeuge ermöglicht.

In einer vorteilhaften Weiterführung dieser Ausführung mit Sicherheitseinrichtung wird vorgeschlagen, dass der Schalthebel in seiner Schwenkachsenrichtung federnd gelagert ausgeführt ist, eine schräge Gleitebene gefolgt von einer Vertiefung im Schwenkbereich des ersten Arms des Kniehebels vorgesehen ist, der erste Arm des Kniehebels eine hervorstehende Erhebung, beispielsweise einen Bolzen, aufweist, so dass sich bei einer Schwenkbewegung des Schalthebels von der gekoppelten Stellung zur entkoppelten Stellung der Schalthebel gegen die federnde Lagerung verschiebt, und am Ende der Bewegung die hervorstehende Erhebung in die Vertiefung einrastet, die nur durch Druck auf den Schalthebel in Schwenkachsenrichtung entgegen der Federung gelöst werden kann.

Zusätzlich zu dieser ersten Sicherungsmaßnahme des erfindungsgemäßen Aufsitzmähers schlagen die Erfinder - gemäß eines weiteren Aspektes, der ebenso mit an sich bekannten Rasenmähern aus dem Stand der Technik verwirklicht werden kann - eine zweite Sicherungsmaßnahme vor, wobei eine zweite Rastierung für den Andruckhebelarm vorgesehen ist, welche den Andruckhebelarm in entkoppelnder Stellung fixiert.

Durch diese zusätzliche Fixierung entsteht eine zweite Sicherung gegen unbeabsichtigtes Einkoppeln der Schneidwerkzeuge.

Vorteilhaft kann die zweite Rastierung aus einer federnden Wippe bestehen, welche ausschließlich in der entkoppelnden Stellung des Andruckhebelarms greifen kann.

Wird diese zweite Sicherung vorteilhaft mit einer an sich vorhandenen Bremsarretierung des Aufsitzrasenmähers gekoppelt, so kann eine Bremsarretierung derart vorgesehen werden, dass eine Fahrzeugbremse im angezogenen Zustand manuell betätigt fixiert werden kann, wobei die Bremsarretierung auch ein Betätigungsmittel aufweist, welches die federnde Wippe zur Rastierung des Andruckhebelarms betätigt. Es wird auf diese Weise also dafür gesorgt, dass mit der Betätigung der Bremsvorrichtung und deren Arretierung gleichzeitig auch die Vorrichtung zur Kopplung der Schneidwerkzeuge mit dem Motorantrieb sicher gegen unbeabsichtigtes Einschalten gesichert wird. Drückt der Fahrer nun bei ausgeschaltetem Mähdeck die Bremse und verrastet diese, so kann er absteigen, ohne dass der Motor, wegen des Sitzsicherheitsschalters, ausgeht. Somit wird verhindert, dass das Mähdeck durch Dritte, Fehlbedienung oder Fehlfunktion eingeschaltet wird, wobei zwar auch ohne diese zweite Sicherung der Motor über einen Sitzsicherheitsschalter abgeschaltet werden würde. Allerdings läuft auf Grund der vorhandenen Schwungmasse das Mähwerk noch ein paar Sekunden nach und es könnte zu Verletzungen kommen. Durch die erfindungsgemäße zweite Sicherung wird die Zuschaltung des Mähdecks durch eine mit der Bremse verbundene Kipphebelsperre wirksam blockiert, so dass eine Verletzungsgefahr auszuschließen ist. Außerdem kann das Mähdeck immer entkoppelt werden, auch wenn die Bremse arretiert ist. Es ist also immer möglich das Mähdeck zu entkoppeln. Das Einkoppeln ist jedoch nur in vordefinierter Situation möglich.

In einer besonders vorteilhaften Ausführungsform dieser Variante des Aufsitzmähers schlagen die Erfinder außerdem vor, dass die Bremsarretierung einen Handhebel aufweist, der eine schwenkbar gelagerte Arretierungswelle über einen ersten Exzenter verschwenken kann, und an der Arretierungswelle einen zweiten Exzenter aufweist, der die federnde Wippe bei der Betätigung zur Arretierung der Fahrzeugbremse einseitig entgegen einer Federkraft auslenkt, so dass die andere Seite der Wippe den Andruckhebelarm verriegelt.

Erfindungsgemäß kann weiterhin die zuvor beschriebene Mehrfachkeilriemenscheibe bevorzugt als doppelte, dreifache oder vierfache Keilriemenscheibe ausgebildet werden.

Das Mähdeck kann bevorzugt über genau zwei oder genau drei Schneidwerkzeuge verfügen, wobei beispielsweise mindestens zwei Schneidwerkzeuge über einen einzigen Keilriemen angetrieben werden können oder aber auch mindestens ein Schneidwerkzeug über einen eigenen Keilriemen angetrieben wird.

Des Weiteren kann mindestens ein zweiter Keilriemen über mindestens eine Spannrolle verlaufen, wobei mindestens eine Spannrolle je Keilriemen federbelastet ausgeführt werden kann.

Außerdem ist es besonders vorteilhaft, wenn das Mähdeck höhenverstellbar unter dem Antriebsmotor und zwischen den Vorderrädern und den Hinderrädern angeordnet ist, da hierdurch eine besonders platzsparende Bauweise des gesamten Aufsitzmähers in Verbindung mit den zuvor genannten Eigenarten möglich ist.

Im Folgenden wird die Erfindung anhand eines bevorzugten Ausführungsbeispieles mit Hilfe der Figuren näher beschrieben, wobei nur die zum Verständnis der Erfindung notwendigen Merkmale dargestellt sind. Hierbei werden die folgenden figuren-übergreifenden Bezugszeichen verwendet: 1: Aufsitzrasenmäher; 2: Antriebsmotor; 3: Mähdeck; 4.1: Antriebswelle; 4.2: Antriebskeilriemenscheibe; 5.1: Schneidachse; 5.2: Schneidwerkzeug; 5.3: Keilriemenantrieb/Keilriemenscheibe; 6.1; Schneidachse; 6.2: Schneidwerkzeuge; 6.3: Keilriemenantrieb/Keilriemenscheibe; 7: erster Keilriemen; 8: zweiter Keilriemen; 9.1: Drehachse; 9.2: Mehrfachkeilriemenscheibe; 10.1, 10.2: Spannvorrichtung/Schwenkachse/Spannhebelarm; 11.1: Schneidachse; 11.2: Schneidwerkzeug; 11.3: Keilriemenscheibe; 12: Spannrolle; 13: Spannrolle, federbelastet; 14.1 - 14.3: Bremsvorrichtung; 14.1: Achse; 14.2: Bremsfederarm; 14.3: Bremsklotz; 14.4: Feder; 15.1, 15.2: Stift; 15.3: Bügel; 16: Spannfeder; 17: Schalthebel; 17.1: Feder; 18.1: erster Arm des Kniegelenkes, 18.1.1: Dorn; 18.2: zweiter Arm des Kniegelenkes; 19.1: Schwenkachse; 19.2: Andruckhebelarm; 19.3: Andruckrolle; 20.1: schräge Gleitebene; 20.2: Vertiefung; 22: zweite Rastierung/federnden Wippe; 23.1: schwenkbar gelagerte Arretierungswelle; 23.2: zweiter Exzenter; 23.3: dritter Exzenter; 23.4: erster Exzenter; 24: Handhebel; 25: Vorderräder; 26: Hinterräder; 27: Konsole.

Es zeigen im Einzelnen:
- FIG 1:: Aufsitzrasenmäher mit Mähdeck;
- FIG 2:: Übersicht des gesamten Riemenantriebs mit drei Schneidwerkzeugen von unten;
- FIG 3:: Detailansicht der Kraftübertragung zwischen Motor und Riemenantrieb mit erstem Keilriemen im entkoppelten Zustand;
- FIG 4:: Detailansicht der Kraftübertragung zwischen Motor und Riemenantrieb mit erstem Keilriemen im gekoppelten Zustand;
- FIG 5:: Darstellung von FIG 3 in Schrägansicht von unten;
- FIG 6:: Darstellung von FIG 4 in Schrägansicht von unten;
- FIG 7:: Doppelte Keilriemenscheibe mit Spannvorrichtung;
- FIG 8:: Vergrößerte Darstellung des Kniehebelbereiches aus FIG 6.

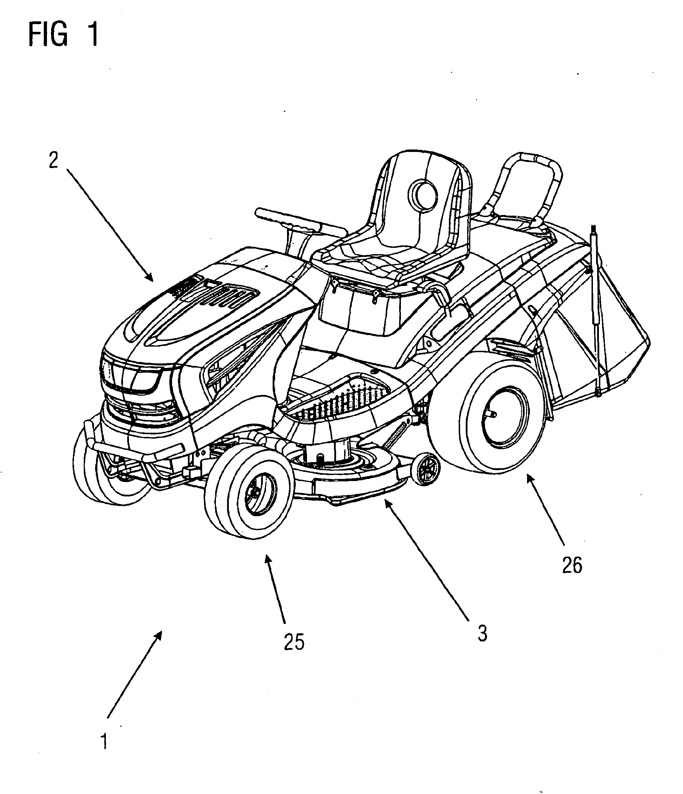

Die **Figur 1** zeigt eine 3D-Ansicht eines erfindungsgemäßen Aufsitzrasenmähers 1 mit einem Mähdeck 3. Der Aufsitzrasenmäher 1 verfügt unter einer Haube über einen Antriebsmotor 2, der über einen hier nicht gezeigten Keilriemenantrieb auf das zwischen den Vorderrädern 25 und den Hinterrädern 26 gelegene Mähdeck 3 einwirkt.

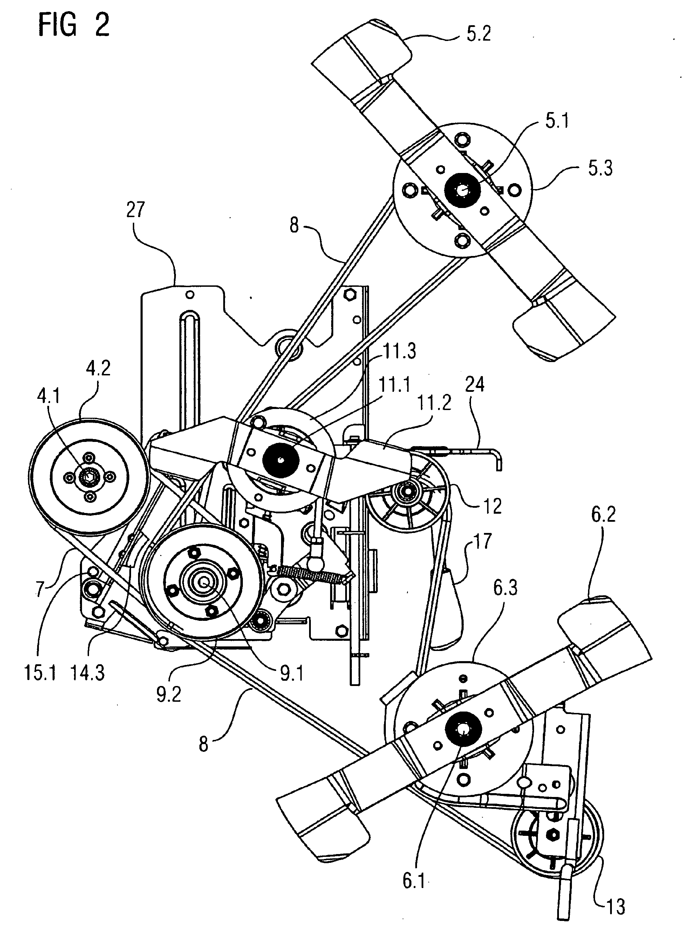

Die **Figur 2** zeigt eine Ansicht von unten auf die im Mähdeck 3 angeordneten Schneidwerkzeuge und die Kraftübertragung zwischen der Antriebswelle 4.1 und den Schneidwerkzeugen 5.2, 6.2, 11.2. Das Gehäuse des Mähdecks selbst ist hierbei nicht erkennbar, lediglich eine Konsole 27, auf der die Spannvorrichtung für die Kraftübertragung des ersten Keilriemens 7 zwischen der Antriebswelle 4.1 und der darauf angeordneten Keilriemenscheibe 4.2 und der Mehrfachkeilriemenscheibe 9.2, die ebenfalls auf einer Achse 9.1 angeordnet ist, angebracht ist.

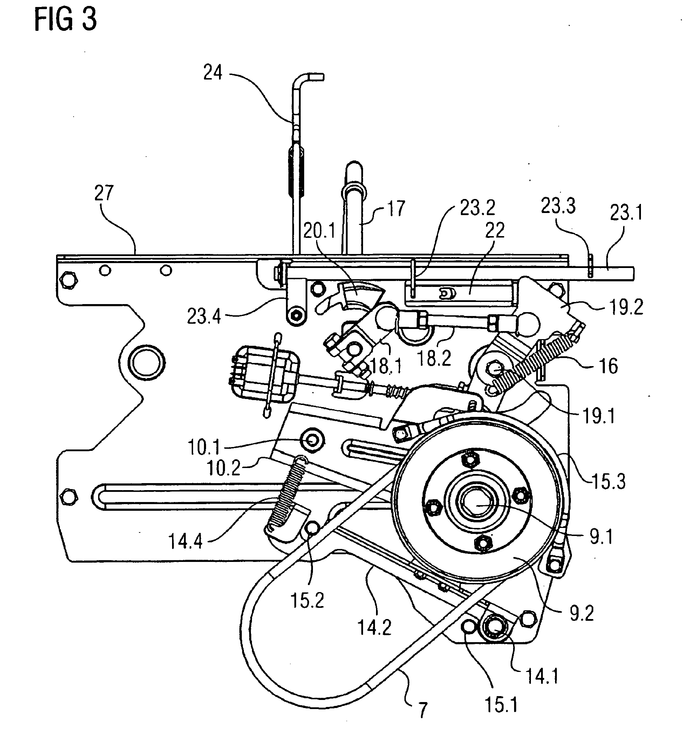

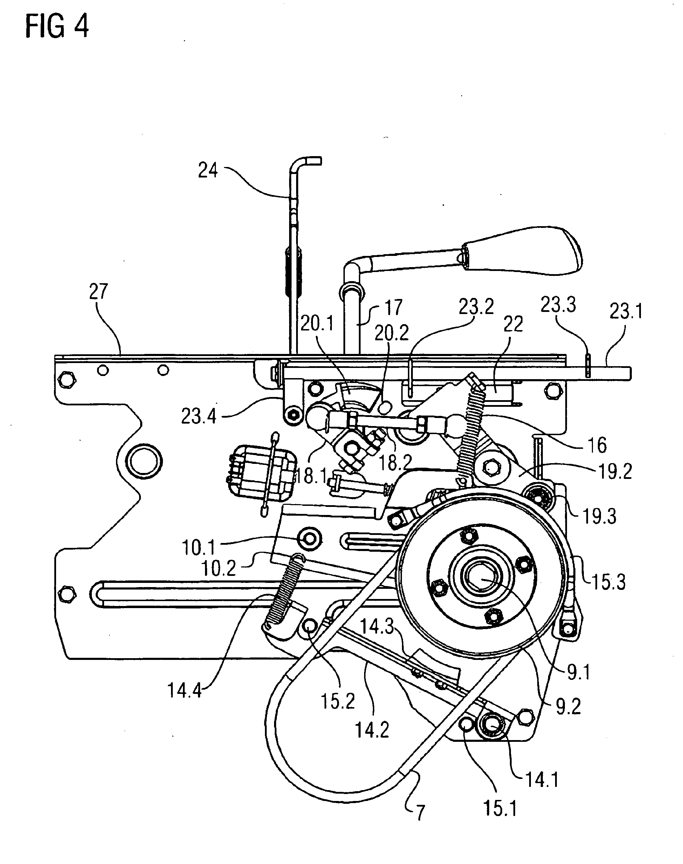

Die gezeigte Darstellung zeigt die Antriebssituation in einer gekoppelten Phase, in der der Bremsklotz 14.3 nicht an der Keilriemenscheibe 9.2 anliegt. Von der Motorseite kommend reicht eine Antriebswelle 4.1 in den Bereich des Keilriemenantriebs, wo sie mit einer Keilriemenscheibe 4.2 verbunden ist, auf der ein erster Keilriemen 7 verläuft, der ausschließlich die Antriebskeilriemenscheibe 4.2 und die Mehrfachkeilriemenscheibe 9.2 umschließt. Die Mehrfachkeilriemenscheibe 9.2 ist auf einer Welle 9.1 gelagert, die auf einer Spannvorrichtung befestigt ist (gezeigt in den Figuren 3 und 4) und durch diese Spannvorrichtung mit Hilfe einer Spannfeder die notwendige Spannung auf den ersten Keilriemen 7 aufbringt. In der hier gezeigten Darstellung mit den drei Schneidwerkzeugen werden diese über Keilriemenscheiben 5.3, 6.3 und 11.3 mit Hilfe eines einzigen umlaufenden zweiten Keilriemens 8 angetrieben, indem dieser über die doppelte Keilriemenscheibe 9.2 geführt wird, durch zwei Spannrollen 12 und 13 in den Sitz der Keilriemenscheiben 5.3, 6.3 und 11.3 eingepresst wird , wobei die Spannrolle 13 federbelastet ist, so dass die auf den zugehörigen Wellen 5.1, 6.1 und 11.1 angeordneten Schneidwerkzeuge 5.2, 6.2 und 11.2 in Rotation gebracht werden können.

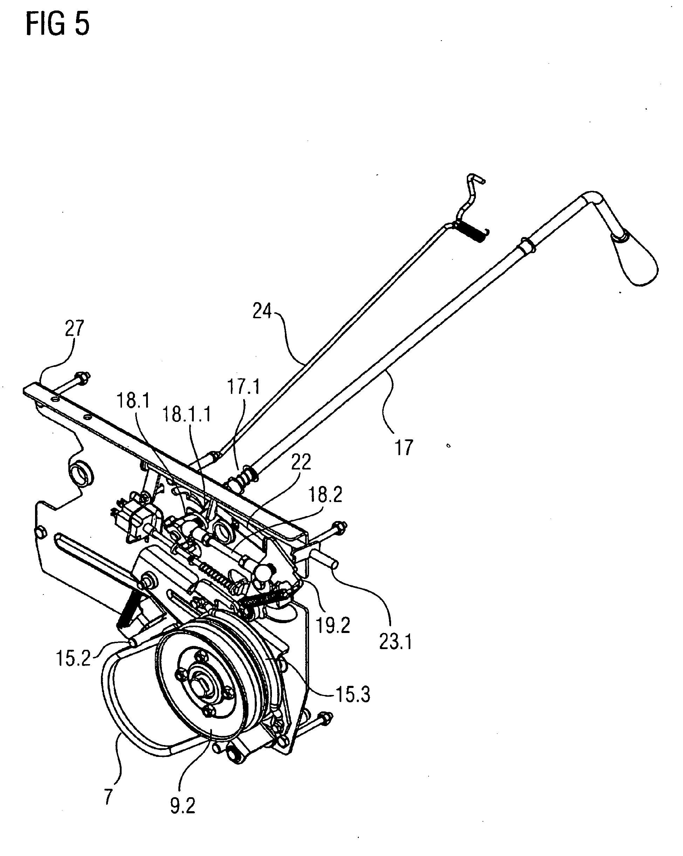

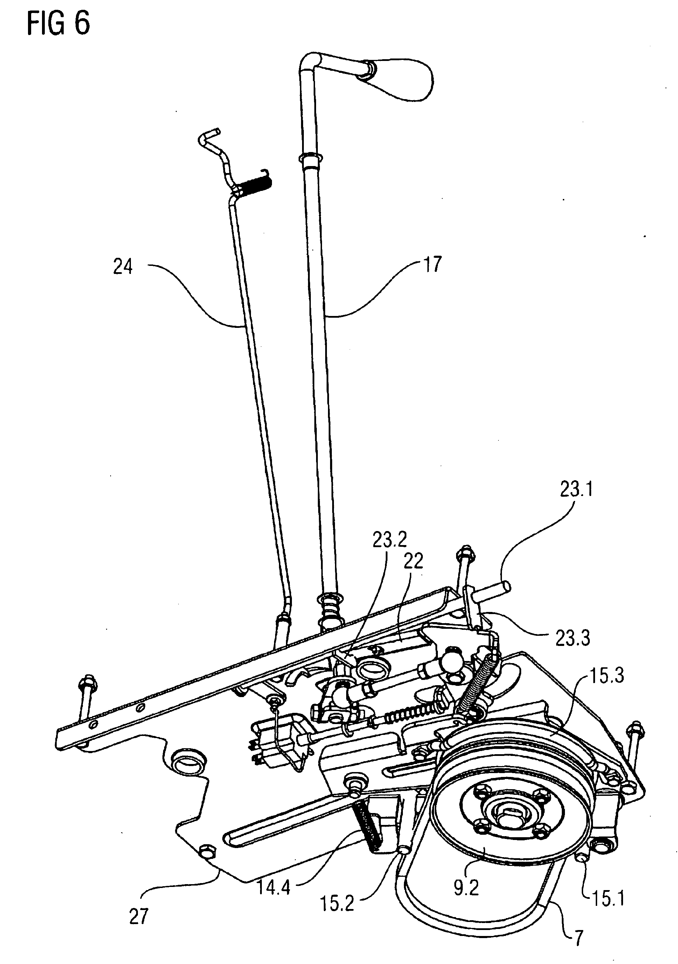

Eine detaillierter dargestellte Situation der Ankopplung des Antriebs mit den Schneidwerkzeugen ist in den **Figuren 3 bis 6** dargestellt, wobei die Figur 3 und die Figur 5 jeweils eine entkoppelte Situation des Antriebs und die Figuren 4 und 6 eine gekoppelte Situation des Antriebs darstellen. Die Figuren 3 und 4 zeigen eine 3D-Darstellung von unten, relativ flach auf die Antriebssituation, während die Figuren 5 und 6 eine Schrägdarstellung der Antriebssituation von unten darstellen.

In diesen Figuren ist erkennbar, dass die Spannvorrichtungen der Mehrfachkeilriemenscheibe 9.2 aus einem Hebelarm 10.2 besteht, der exzentrisch zur Welle 9.1 der Mehrfachkeilriemenscheibe 9.2 an einer Achse 10.1 schwenkbar gelagert ist. Dieser Spannhebelarm 10.2 wird mit Hilfe einer Feder 16 derart gespannt, dass er ohne weitere Einwirkung sonstiger Kräfte den ersten Keilriemen 7 zwischen den beiden Keilriemenscheiben 9.2 und der hier nicht gezeigten Antriebskeilriemenscheibe 4.2 derart spannt, dass eine Kraftübertragung zwischen den beiden Keilriemenscheiben stattfindet. Soll diese Kraftübertragung entkoppelt werden, so wird hierfür ein Schalthebel 17, der schwenkbar in der Konsole gelagert ist, gedreht, an dessen Ende sich ein Kniehebel, bestehend aus einem ersten Hebelarm 18.1, der am Schalthebel 17 befestigt ist, und einem zweiten Hebelarm 18.2, befindet. Der zweite Hebelarm 18.2 wird über Kugelgelenke mit dem ersten Hebelarm 18.1 und einem Andruckhebelarm 19.2 verbunden. Der Andruckhebelarm 19.2 ist hier als doppelter Hebelarm ausgeführt, der etwa mittig um eine Schwenkachse 19.1 schwenkbar ist und am anderen Ende über eine Andruckrolle 19.3 verfügt, die bei der Betätigung des Schalthebels 17 gegen die Federkraft der Spannfeder 16 wirkend auf die Spannvorrichtung der doppelten Keilriemenscheibe, also auf den Spannhebelarm 10.2 wirkt und entgegen der Federkraft der Spannfeder 16 eine Bewegung der doppelten Keilriemenscheibe in Richtung Antriebskeilriemenscheibe 4.2 bewirkt. Im gekoppelten Zustand hebt die Andruckrolle 19.3 vollständig ab, so dass keine mechanische Kopplung vorliegt und somit auch keine Vibrationen vom Mähdeck auf den Schalthebel 17 übertragen werden.

Durch die Bewegung der doppelten Keilriemenscheibe 9.2 in Richtung der Antriebskeilriemenscheibe 4.2 wird die doppelte Keilriemenscheibe 9.2 gleichzeitig gegen den Bremsklotz 14.3 geführt, der ebenfalls federnd auf einem Bremsfederarm 14.2 befestigt ist, der exzentrisch an einer Achse 14.1 gelagert ist und über eine Feder 14.4 im entkoppelten Zustand an die doppelte Keilriemenscheibe 9.2 angedrückt wird. Durch diese Bremsvorrichtung wird bewirkt, dass automatisch beim Entkoppeln des Schneidwerkzeuges vom Antriebsmotor eine Bremswirkung auf den mit der doppelten Keilriemenscheibe 9.2 verbundenen zweiten Keilriemen 8 einwirkt, so dass die Schneidelemente 5.2, 6.2 und 11.2 automatisch zum Stillstand gebracht werden, so dass keine Verletzungsgefahr mehr besteht.

Gleichzeitig mit der Drehbewegung des Schalthebels 17 wird dieser entlang der Drehachse des Schalthebels 17 gegen eine Feder 17.1 wirkend nach unten gedrückt, da der erste Kniehebelarm 18.1 des Kniehebels, sich auf einer schrägen Ebene 20.1 bewegt, die für diesen Versatz des Schalthebels 17 bei einer Drehbewegung verantwortlich ist, bis der Kniehebelarm 18.1 am Ende seiner Abwärtsbewegung mit einem Dorn 18.1.1 in einer Aussparung 20.2 eingreift und durch die Federkraft der Feder 17.1 dort verriegelt wird. Durch diese Rastierung wird erreicht, dass ein unbeabsichtigtes Lösen des Kniehebels und damit ein unbeabsichtigtes Einkoppeln der Schneidwerkzeuge verhindert wird.

Zusätzlich zu dieser ersten Sicherheitsvorrichtung weist die hier dargestellte Antriebssituation eine zweite Sicherheitsvorrichtung auf, die durch einen zweiten Handhebel 24, der in Verbindung mit einer Bremsverriegelung steht, ausgelöst wird.

Die Bremsverriegelung besteht hier aus einer schwenkbar gelagerten Arretierungswelle 23.1, die über den federnd gelagerten Handhebel 24 mit Hilfe eines ersten Exzenters 23.4 zur Arretierung verdreht werden kann. An dieser Arretierungswelle 23.1 befindet sich ein dritter Exzenter 23.3, der zur Bremsverriegelung das Bremspedal arretieren kann, indem er in an sich bekannter Weise in eine Lasche des Bremspedals eingreift, während gleichzeitig der zusätzlich angebrachte zweite Exzenter 23.2 auf eine federnde Wippe 22 drückt, so dass diese auf der gegenüberliegenden Seite aufgestellt wird und ein Rückschwenken des doppelten Hebelarms 19.2 verhindert, so dass über diese zweite Sicherung ein unbeabsichtigtes Einkoppeln des Motorantriebs mit den Schneidwerkzeugen verhindert wird.

In den Figuren 3 bis 6 ist außerdem noch gut erkennbar, wie mit Hilfe der Stifte 15.1 und 15.2 beim Entkoppeln der Antriebsvorrichtung verhindert wird, dass der Keilriemen 7 seine runde Form annimmt und damit sicher von der Antriebskeilriemenscheibe abgehoben wird. Zusätzlich ist der Bügel 15.3 erkennbar, mit dem der Keilriemen gleichzeitig in seiner Führungsnut der doppelten Keilriemenscheibe 9.2 gehalten wird.

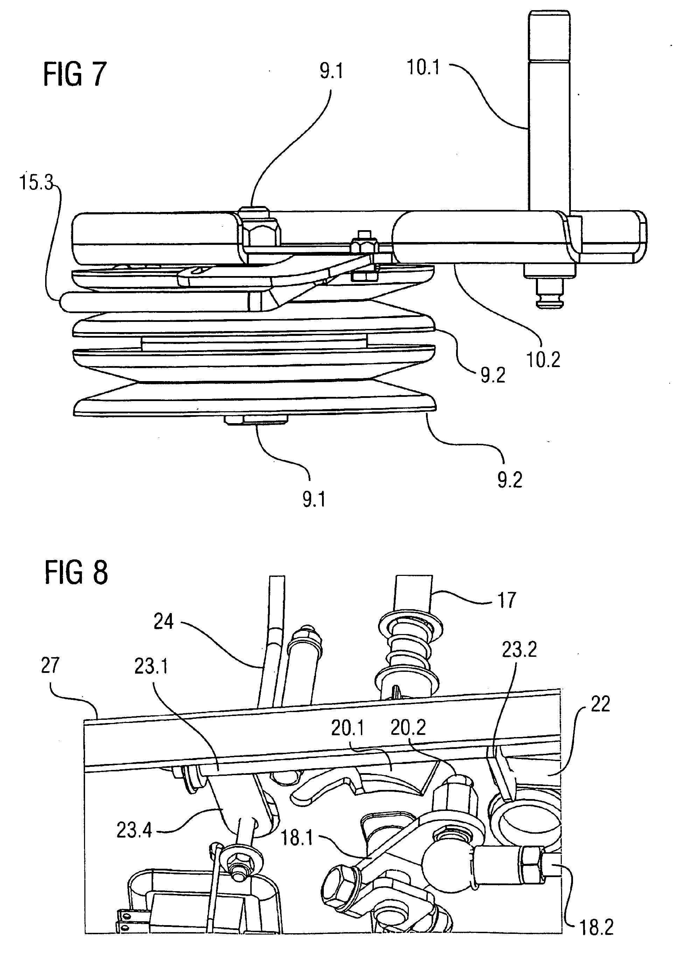

Zusätzlich ist der Bereich des Kniehebels aus der Figur 6 in der **Figur 8** nochmals vergrößert dargestellt.

Diese Situation ist zusätzlich auch in der **Figur 7** dargestellt, die die doppelte Keilriemenscheibe 9.2 mit den beiden Keilriemennuten darstellt, wobei im Bereich der oberen Nut, in der der erste Keilriemen 7 verläuft, der Bügel 15.3 gut erkennbar ist. Die doppelte Keilriemenscheibe 9.2 wird durch die Achse 9.1 drehbar gelagert, die sich auf dem Schwenkarm 10.2 befindet, der wiederum über die Schwenkachse 10.1 in der hier nicht dargestellten Konsole 27 schwenkbar gelagert ist.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Insbesondere erscheinen die nachfolgend beschriebenen Merkmalskombinationen als besonders günstig:
I) Aufsitzrasenmäher 1 aufweisend:
   a) einen Antriebsmotor 2,
   b) ein Mähdeck 3, das direkt oder über ein Getriebe von einer Antriebswelle 4.1 mit einer Antriebskeilriemenscheibe 4.2 angetrieben wird,
   c) das Mähdeck 3 mit mindestes zwei horizontal um jeweils eine Schneidachse 5.1, 6.1, 11.1 rotierenden Schneidwerkzeugen 5.2, 6.2, 11.2, die über einen Keilriemenantrieb 8, 5.3, 6.3, 11.3, 12, 13 durch die Antriebskeilriemenscheibe 4.2 angetrieben werden, wobei
   d) die Antriebskeilriemenscheibe 4.2 mit Hilfe eines ersten spann- und entspannbaren Keilriemens 7 eine Mehrfachkeilriemenscheibe 9.2 antreibt,
   e) eine Spannvorrichtung 10.1, 10.2 vorgesehen ist, welche die Mehrfachkeilriemenscheibe 9.2 zum Spannen des ersten Keilriemens 7 parallel zu ihrer Drehachse 9.1 bewegen kann,
   f) mindestens ein zweiter Keilriemen 8 vorgesehen ist, welcher die mindestens zwei Schneidwerkzeuge 5.2, 6.2 über weitere Keilriemenscheiben 5.3, 6.3 antreibt, wobei der zweite Keilriemen 8 permanent auch während entkoppelten Zustandes zur Antriebskeilriemenscheibe 4.2 gespannt ist, und
   g) eine direkt auf die Mehrfachkeilriemenscheibe 9.2 wirkende Bremsvorrichtung 14.1 - 14.3 vorgesehen ist, die auf die Mehrfachkeilriemenscheibe 9.2 einwirkt, sobald sich die Mehrfachkeilriemenscheibe 9.2 zum Entspannen des ersten Keilriemens 7 der Antriebskeilriemenscheibe 4.2 nähert.
II) Aufsitzmäher gemäß Merkmalskombination I, wobei die Bremsvorrichtung einen federelastisch gelagerten Bremsklotz 14.3 aufweist, gegen den im Fall einer Entkopplung des Antriebs die Mehrfachkeilriemenscheibe 9.2 gedrückt wird.
III) Aufsitzmäher gemäß Merkmalskombination II, wobei der Bremsklotz 14.3 auf einem exzentrisch um eine Achse 14.1 und federnd 14.4 gelagerten Hebelarm (=Bremsfederarm) 14.2 aufgebracht ist.
IV) Aufsitzmäher gemäß einer der Merkmalskombinationen II bis III, wobei der Bremsklotz 14.3 zwischen der Mehrfachkeilriemenscheibe 9.2 und der Antriebskeilriemenscheibe 4.2 angeordnet ist.
V) Aufsitzmäher gemäß einer der Merkmalskombinationen II bis IV, wobei im Laufbereich des ersten Keilriemens 7 Begrenzungen 15.1, 15.2, 15.3 vorgesehen sind, welche im entkoppelten Zustand ein Aufrunden und Abspringen des ersten Keilriemens 7 verhindern.
VI) Aufsitzmäher gemäß Merkmalskombination V, wobei eine Begrenzung aus einem Bügel 15.3 besteht, der einen Sektor der Mehrfachkeilriemenscheibe 9.2 auf der Höhe des ersten Keilriemens 7 umschließt.
VII) Aufsitzmäher einer der Merkmalskombinationen V bis VI, wobei eine Begrenzung aus mindestens einem Stift 15.1, 15.2 oder Blech besteht, der den Laufbereich des ersten Keilriemens 7 zwischen den Keilriemenscheiben 4.2, 9.2 begrenzt.
VIII) Aufsitzmäher gemäß einer der voranstehenden Merkmalskombinationen, wobei die Spannvorrichtung der Mehrfachkeilriemenscheibe 9.2 aus einem Hebelarm (Spannhebelarm) 10.2 besteht, der exzentrisch zur Drehachse 9.1 der Mehrfachkeilriemenscheibe 9.2 federnd um eine Schwenkachse 10.1 gelagert ist und auf dem die Mehrfachkeilriemenscheibe 9.2 gelagert ist.
IX) Aufsitzmäher gemäß der Merkmalskombination VIII, wobei mindestens eine Feder (=Spannfeder) 16 derart am Spannhebelarm 10.2 angelenkt ist, dass die mindestens eine Spannfeder 16 die notwendige Spannung zwischen der Antriebskeilriemenscheibe 4.2 und der Mehrfachkeilriemenscheibe 9.2 für den ersten Keilriemen 7 aufbringt.
X) Aufsitzmäher gemäß einer der Merkmalskombinationen VIII bis IX, wobei ein Schalthebel 17 zum An- und Entkoppeln der mindestens zwei Schneidwerkzeuge 5.2, 6.2 vorgesehen ist, der ein Kniegelenk 18.1, 18.2 betätigt, welches an einem weiteren Hebelarm (=Andruckhebelarm) 19.2 angreift, der den Spannhebelarm 10.2 betätigt.
XI) Aufsitzmäher gemäß der Merkmalskombinationen X, wobei der Andruckhebelarm 19.2 ein doppelter Hebelarm ist.
XII) Aufsitzmäher gemäß einer der Merkmalskombinationen X bis XI, wobei das Kniegelenk 18.1, 18.2 im gespannten Zustand über den Andruckhebelarm 19.2 den ersten Keilriemen 7 entspannt.
XIII) Aufsitzmäher gemäß einer der Merkmalskombinationen X bis XII, wobei der Andruckhebelarm 19.2 spannhebelseitig eine Rolle 19.3 als Drucklager aufweist.
XIV) Aufsitzmäher gemäß einer der Merkmalskombinationen IX bis XIII, wobei die Spannfeder eine Zugfeder 16 ist, die einerseits am Spannhebel 10.2 und andererseits am Doppelhebelarm 19.2 angelenkt ist.
XV) Aufsitzmäher gemäß einer der Merkmalskombinationen XIII bis XIV, wobei die Rolle 19.3 und damit auch der Schalthebel 17 im eingekoppelten Zustand des Mähdecks 3 keinen Kontakt zur Mehrfachkeilriemenscheibe 9.2 aufweist.
XVI) Aufsitzmäher gemäß einer der Merkmalskombinationen X bis XV, wobei:
   a) der Schalthebel 17 drehbar ist,
   b) ein erster Arm 18.1 des Kniegelenkes am Schalthebel 17 angelenkt ist,
   c) ein zweiter Arm 18.2 des Kniegelenkes am Andruckhebelarm 19.2 angelenkt ist,
   d) eine erste Rastierung 20.2 des Kniegelenkes 18.1, 18.2 vorgesehen ist, in der das Kniegelenk 18.1, 18.2 einrastet, sobald der Kniehebel die Schneidwerkzeuge entkoppelt.
XVII) Aufsitzmäher gemäß der voranstehenden Merkmalskombination XVI, wobei
   a) der Schalthebel 17 in seiner Schwenkachsenrichtung federnd gelagert ausgeführt ist,
   b) eine schräge Gleitebene 20.1 gefolgt von einer Vertiefung 20.2 im Schwenkbereich des ersten Arms 18.1 des Kniehebels vorgesehen ist,
   c) der erste Arm 18.1 des Kniehebels eine hervorstehende Erhebung (z.B. Bolzen) aufweist,
   d) so dass sich bei einer Schwenkbewegung des Schalthebels 17 von der gekoppelten Stellung zur entkoppelten Stellung der Schalthebel 17 gegen die federnde Lagerung verschiebt, und am Ende der Bewegung die hervorstehende Erhebung in die Vertiefung 20.2 einrastet, die nur durch Druck auf den Schalthebel 17 in Schwenkachsenrichtung entgegen der Federung gelöst werden kann.
XVIII) Aufsitzmäher gemäß einer der voranstehenden Merkmalskombinationen X bis XVII, wobei eine zweite Rastierung 22 für den Andruckhebelarm 19.2 vorgesehen ist, welche den Andruckhebelarm 19.2 in entkoppelnder Stellung fixiert.
XIX) Aufsitzmäher gemäß der voranstehenden Merkmalskombination XVIII, wobei die zweite Rastierung aus einer federnden Wippe 22 besteht, welche ausschließlich in der entkoppelnden Stellung des Andruckhebelarms 19.2 greifen kann.
XX) Aufsitzmäher gemäß der voranstehenden Merkmalskombination XIX, wobei eine Bremsarretierung 24, 23.1 - 23.4 vorgesehen ist, welche eine Fahrzeugbremse im angezogenen Zustand manuell betätigt fixiert werden kann, wobei die Bremsarretierung 24, 23.1 - 23.4 auch ein Betätigungsmittel 23.2 aufweist, welches die federnde Wippe 22 betätigt.
XXI) Aufsitzmäher gemäß der voranstehenden Merkmalskombination XX, wobei
   a) die Bremsarretierung 24, 23.1 - 23.4 einen Handhebel 24 aufweist, der eine schwenkbar gelagerte Arretierungswelle 23.1 über einen ersten Exzenter 23.4 verschwenken kann, und
   b) an der Arretierungswelle 23.1 einen zweiten Exzenter 23.2 ausweist, der die federnde Wippe 22 bei der Betätigung zur Arretierung der Fahrzeugbremse einseitig entgegen einer Federkraft auslenkt, so dass die andere Seite der Wippe 22 den Andruckhebelarm 19.2 verriegelt.
XXII) Aufsitzmäher gemäß einer der voranstehenden Merkmalskombinationen, wobei die Mehrfachkeilriemenscheibe als doppelte Keilriemenscheibe 9.2 ausgebildet ist.
XXIII) Aufsitzmäher gemäß einer der voranstehenden Merkmalskombinationen I bis XXI, wobei die Mehrfachkeilriemenscheibe als dreifache Keilriemenscheibe ausgebildet ist.
XXIV) Aufsitzmäher gemäß einer der voranstehenden Merkmalskombinationen I bis XXI, wobei die Mehrfachkeilriemenscheibe als vierfache Keilriemenscheibe ausgebildet ist.
XXV) Aufsitzmäher gemäß einer der voranstehenden Merkmalskombinationen I bis XXIV, wobei das Mähdeck 3 zwei Schneidwerkzeuge 5.2, 6.2 aufweist.
XXVI) Aufsitzmäher gemäß einer der voranstehenden Merkmalskombinationen I bis XXIV, wobei das Mähdeck 3 drei Schneidwerkzeuge 5.2, 6.2, 11.2 aufweist.
XXVII) Aufsitzmäher gemäß einer der voranstehenden Merkmalskombinationen I bis XXVI, wobei mindestens zwei Schneidwerkzeuge 5.2, 6.2 über einen einzigen zweiten Keilriemen 8 angetrieben werden.
XXVIII) Aufsitzmäher gemäß einer der voranstehenden Merkmalskombinationen I bis XXVII, wobei mindestens ein Schneidwerkzeug über einen eigenen zweiten Keilriemen 8 angetrieben wird.
XXIX) Aufsitzmäher gemäß einer der voranstehenden Merkmalskombinationen I bis XXVIII, wobei mindestens ein zweiter Keilriemen 8 über mindestens eine Spannrolle 12, 13 verläuft.
XXX) Aufsitzmäher gemäß der voranstehenden Merkmalskombination XXIX, wobei mindestens eine Spannrolle 13 je Keilriemen 8 federbelastet ausgeführt ist.
XXXI) Aufsitzmäher gemäß einer der voranstehenden Merkmalskombinationen, wobei das Mähdeck 3 höhenverstellbar unter dem Antriebsmotor 2 und zwischen den Vorderrädern 25 und den Hinderrädern 26 angeordnet ist.

Es wird auch darauf hingewiesen, dass im Rahmen der Erfindung auch eine eigenständige Kombination im Umfang der Merkmale der nachfolgenden Anspruchsgruppierungen liegt:
Merkmale Ia bis Ic i.V.m. den Merkmalskombinationen VIII bis XV;
Merkmale Ia bis Ic i.V.m. den Merkmalskombinationen XVI bis XVII;
Merkmale Ia bis Ic i.V.m. den Merkmalskombinationen XVIII bis XXI;
jede der letztgenannten drei Merkmalskombinationen auch i.V.m. den Merkmalen XXII bis XXXI.

### Bezugszeichenliste:

- 1: Aufsitzrasenmäher
- 2: Antriebsmotor
- 3: Mähdeck
- 4.1: Antriebswelle
- 4.2: Antriebskeilriemenscheibe
- 5.1: Schneidachse
- 5.2: Schneidwerkzeug
- 5.3: Keilriemenantrieb/Keilriemenscheibe
- 6.1: Schneidachse
- 6.2: Schneidwerkzeuge
- 6.3: Keilriemenantrieb/Keilriemenscheibe
- 7: erster Keilriemen
- 8: zweiter Keilriemen
- 9.1: Drehachse
- 9.2: Mehrfachkeilriemenscheibe
- 10.1,10.2: Spannvorrichtung/Schwenkachse/Spannhebelarm
- 11.1: Schneidachse
- 11.2: Schneidwerkzeug
- 11.3: Keilriemenscheibe
- 12: Spannrolle
- 13: Spannrolle, federbelastet
- 14.1-14.3: Bremsvorrichtung
- 14.1: Achse
- 14.2: Bremsfederarm
- 14.3: Bremsklotz
- 14.4: Feder
- 15.1,15.2: Stift
- 15.3: Bügel
- 16: Spannfeder
- 17: Schalthebel
- 17.1: Feder
- 18.1: erster Arm des Kniegelenkes
- 18.1.1: Dorn
- 18.2: zweiter Arm des Kniegelenkes
- 19.1: Schwenkachse
- 19.2: Andruckhebelarm
- 19.3: Andruckrolle
- 20.1: schräge Gleitebene
- 20.2: Vertiefung
- 22: zweite Rastierung/federnden Wippe
- 23.1: schwenkbar gelagerte Arretierungswelle
- 23.2: zweiter Exzenter
- 23.3: dritter Exzenter
- 23.4: erster Exzenter
- 24: Handhebel
- 25: Vorderräder
- 26: Hinterräder
- 27: Konsole

## Patentansprüche

1. Aufsitzrasenmäher (1) aufweisend:
1.1, einen Antriebsmotor (2),
1.2. ein Mähdeck (3), das direkt oder über ein Getriebe von einer Antriebswelle (4.1) mit einer Antriebskeilriemenscheibe (4.2) angetrieben wird,
1.3. das Mähdeck (3) mit mindestes zwei horizontal um jeweils eine Schneidachse (5.1, 6.1, 11.1) rotierenden Schneidwerkzeugen (5.2, 6.2, 11.2), die über einen Keilriemenantrieb (8, 5.3, 6.3, 11.3, 12, 13) durch die Antriebskeilriemenscheibe (4.2) angetrieben werden, wobei
1.4. die Antriebskeilriemenscheibe (4.2) mit Hilfe eines ersten spann- und entspannbaren Keilriemens (7) eine Mehrfachkeilriemenscheibe (9.2) antreibt,
1.5. eine Spannvorrichtung (10.1, 10.2) vorgesehen ist, welche die Mehrfachkeilriemenscheibe (9.2) zum Spannen des ersten Keilriemens (7) parallel zu ihrer Drehachse (9.1) bewegen kann,
1.6. mindestens ein zweiter Keilriemen (8) vorgesehen ist, welcher die mindestens zwei Schneidwerkzeuge (5.2, 6.2) über weitere Keilriemenscheiben (5.3, 6.3) antreibt, wobei der zweite Keilriemen (8) permanent auch während entkoppelten Zustandes zur Antriebskeilriemenscheibe (4.2) gespannt ist,
**dadurch gekennzeichnet, dass**
1.7. eine direkt auf die Mehrfachkeilriemenscheibe (9.2) wirkende Bremsvorrichtung (14.1 - 14.3) vorgesehen ist, die auf die Mehrfachkeilriemenscheibe (9.2) einwirkt, sobald sich die Mehrfachkeilriemenscheibe (9.2) zum entspannen des ersten Keilriemens (7) der Antriebsteilriemenscheibe (4.2) nähert.

2. Aufsitzmäher gemäß dem voranstehenden Patentanspruch 1,
**dadurch gekennzeichnet, dass**:
2.1. die Bremsvorrichtung einen federelastisch gelagerten Bremsklotz (14.3) aufweist, gegen den im Fall einer Entkopplung des Antriebs die Mehrfachkeilriemenscheibe (9.2) gedrückt wird,
2.2. der Bremsklotz (14.3) auf einem exzentrisch um eine Achse (14.1) und federnd (14.4) gelagerten Hebelarm (=Bremsfederarm) (14.2) aufgebracht ist, und
2.3. der Bremsklotz (14.3) zwischen der Mehrfachkeilriemenscheibe (9.2) und der Antriebskeilriemenscheibe (4.2) angeordnet ist.

3. Aufsitzmäher gemäß einem der voranstehenden Patentansprüche 1 bis 2, **dadurch gekennzeichnet, dass** im Laufbereich des ersten Keilriemens (7) Begrenzungen (15.1, 15.2, 15.3) vorgesehen sind, welche im entkoppelten Zustand ein Aufrunden und Abspringen des ersten Keilriemens (7) verhindern.

4. Aufsitzmäher gemäß dem voranstehenden Patentanspruch 3, **dadurch gekennzeichnet, dass** eine Begrenzung aus einem Bügel (15.3) besteht, der einen Sektor der Mehrfachkeilriemenscheibe (9.2) auf der Höhe des ersten Keilriemens (7) umschließt.

5. Aufsitzmäher gemäß dem voranstehenden Patentanspruch 3, **dadurch gekennzeichnet, dass** eine Begrenzung aus mindestens einem Stift (15.1, 15.2) oder Blech besteht, der den Laufbereich des ersten Keilriemens (7) zwischen den Keilriemenscheiben (4.2, 9.2) begrenzt.

6. Aufsitzmäher gemäß einem der voranstehenden Patentansprüche 1 bis 5, **dadurch gekennzeichnet, dass** die Spannvorrichtung der Mehrfachkeilriemenscheibe (9.2) aus einem Hebelarm (Spannhebelarm) (10.2) besteht, der exzentrisch zur Drehachse (9.1) der Mehrfachkeilriemenscheibe (9.2) federnd um eine Schwenkachse (10.1) gelagert ist und auf dem die Mehrfachkeilriemenscheibe (9.2) gelagert ist.

7. Aufsitzmäher gemäß dem voranstehenden Patentanspruch 6, **dadurch gekennzeichnet, dass** mindestens eine Feder (=Spannfeder) (16) derart am Spannhebelarm (10.2) angelenkt ist, dass die mindestens eine Spannfeder (16) die notwendige Spannung zwischen der Antriebskeilriemenscheibe (4.2) und der Mehrfachkeilriemenscheibe (9.2) für den ersten Keilriemen (7) aufbringt.

8. Aufsitzmäher gemäß einem der voranstehenden Patentansprüche 6 bis 7, **dadurch gekennzeichnet, dass** ein Schalthebel (17) zum An- und Entkoppeln der mindestens zwei Schneidwerkzeuge (5.2, 6.2) vorgesehen ist, der ein Kniegelenk (18.1, 18.2) betätigt, welches an einem weiteren Hebelarm (=Andruckhebelarm) (19.2) angreift, der den Spannhebelarm (10.2) betätigt.

9. Aufsitzmäher gemäß dem voranstehenden Patentanspruche 8, **dadurch gekennzeichnet dass** das Kniegelenk (18.1, 18.2) im gespannten Zustand über den Andruckhebelarm (19.2) den ersten Keilriemen (7) entspannt.

10. Aufsitzmäher gemäß einem der voranstehenden Patentansprüche 8 bis 9, **dadurch gekennzeichnet, dass** der Andruckhebelarm (19.2) spannhebelseitig eine Rolle (19.3) als Drucklager aufweist.

11. Aufsitzmäher gemäß dem voranstehenden Patentanspruch 10, **dadurch gekennzeichnet, dass** die Rolle (19.3) und damit auch der Schalthebel (17) im eingekoppelten Zustand des Mähdecks (3) keinen Kontakt zur Mehrfachkeilriemenscheibe (9.2) aufweist.

12. Aufsitzmäher gemäß einem der voranstehenden Patentansprüche 8 bis 11, **dadurch gekennzeichnet dass**:
12.1. der Schalthebel (17) drehbar ist,
12.2. ein erster Arm (18.1) des Kniegelenkes am Schalthebel (17) angelenkt ist,
12.3. ein zweiter Arm (18.2) des Kniegelenkes am Andruckhebelarm (19.2) angelenkt ist,
12.4. eine erste Rastierung (20.2) des Kniegelenkes (18.1, 18.2) vorgesehen ist, in der das Kniegelenk (18.1, 18.2) einrastet, sobald der Kniehebel die Schneidwerkzeuge entkoppelt.

13. Aufsitzmäher gemäß dem voranstehenden Patentanspruch 12, **dadurch gekennzeichnet, dass** eine Bremsarretierung (24, 23.1 - 23.4) vorgesehen ist, welche eine Fahrzeugbremse im angezogenen Zustand manuell betätigt fixiert werden kann, wobei die Bremsarretierung (24, 23.1 - 23.4) auch ein Betätigungsmittel (23.2) aufweist, welches die federnde Wippe (22) betätigt.

14. Aufsitzmäher gemäß dem voranstehenden Patentanspruch 13, **dadurch gekennzeichnet, dass**
14.1. die Bremsarretierung (24, 23.1 - 23.4) einen Handhebel (24) aufweist, der eine schwenkbar gelagerte Arretierungswelle (23.1) über einen ersten Exzenter (23.4) verschwenken kann, und
14.2. an der Arretierungswelle (23.1) einen zweiten Exzenter (23.2) ausweist, der die federnde Wippe (22) bei der Betätigung zur Arretierung der Fahrzeugbremse einseitig entgegen einer Federkraft auslenkt, so dass die andere Seite der Wippe (22) den Andruckhebelarm (19.2) verriegelt.

## Claims

1. Ride-on lawn mower (1) having:
1.1 a drive motor (2)
1.2 a mower deck (3), which is driven directly or via a gearbox by a drive shaft (4.1) with a drive V-belt pulley (4.2),
1.3 the mower deck (3) with at least two cutting tools (5.2, 6.2, 11.2), which rotate horizontally about a respective cutting axis (5.1, 6.1, 11.1) and which are driven via a V-belt drive (8, 5.3, 6.3, 11.3, 12, 13) by the drive V-belt pulley (4.2), wherein
1.4 the drive V-belt pulley (4.2), with the aid of a first tensionable and slackenable V-belt (7), drives a multiple V-belt pulley (9.2),
1.5 a tensioning device (10.1, 10.2) is provided, which can move the multiple V-belt pulley (9.2), for the tensioning of the first V-belt (7), parallel to its rotation axis (9.1),
1.6 at least a second V-belt (8) is provided, which drives the at least two cutting tools (5.2, 6.2) via further V-belt pulleys (5.3, 6.3), the second V-belt (8) being permanently tensioned, including during the decoupled state, with respect to the drive V-belt pulley (4.2),
**characterized in that**
1.7 a braking device (14.1-14.3), acting directly upon the multiple V-belt pulley (9.2), is provided, which acts upon the multiple V-belt pulley (9.2) as soon as the multiple V-belt pulley (9.2), for the slackening of the first V-belt (7), approaches the drive V-belt pulley (4.2).

2. Ride-on mower according to the preceding Patent Claim 1, **characterized in that**:
2.1 the braking device has a spring-mounted brake block (14.3), against which the multiple V-belt pulley (9.2) is pressed in the event of a decoupling of the drive,
2.2 the brake block (14.3) is fitted on a lever arm (=brake spring arm) (14.2) spring-mounted (14.4) eccentrically about an axis (14.1), and
2.3 the brake block (14.3) is disposed between the multiple V-belt pulley (9.2) and the drive V-belt pulley (4.2).

3. Ride-on mower according to one of the preceding Patent Claims 1 to 2, **characterized in that**, in the running area of the first V-belt (7), limit stops (15.1, 15.2, 15.3) are provided, which, in the decoupled state, prevent a riding-up and flying-off of the first V-belt (7).

4. Ride-on mower according to the preceding Patent Claim 3, **characterized in that** a limit stop consists of a bow (15.3), which encloses a sector of the multiple V-belt pulley (9.2) at the level of the first V-belt (7).

5. Ride-on mower according to the preceding Patent Claim 3, **characterized in that** a limit stop consists of at least one pin (15.1, 15.2) or plate, which limits the running area of the first V-belt (7) between the V-belt pulleys (4.2, 9.2).

6. Ride-on mower according to one of the preceding Patent Claims 1 to 5, **characterized in that** the tensioning device of the multiple V-belt pulley (9.2) consists of a lever arm (tensioning lever arm) (10.2), which is mounted eccentrically to the rotation axis (9.1) of the multiple V-belt pulley (9.2) resiliently about a pivot axis (10.1) and on which the multiple V-belt pulley (9.2) is mounted.

7. Ride-on mower according to the preceding Patent Claim 6, **characterized in that** at least one spring (=tension spring) (16) is articulately attached to the tensioning lever arm (10.2) in such a way that the at least one tension spring (16) applies the necessary tension between the drive V-belt pulley (4.2) and the multiple V-belt pulley (9.2) for the first V-belt (7).

8. Ride-on mower according to one of the preceding Patent Claims 6 to 7, **characterized in that** an operating lever (17) for the coupling and decoupling of the at least two cutting tools (5.2, 6.2) is provided, which actuates a toggle joint (18.1, 18.2) acting upon a further lever arm (=pressure lever arm) (19.2) that actuates the tensioning lever arm (10.2).

9. Ride-on mower according to the preceding Patent Claim 8, **characterized in that** the toggle joint (18.1, 18.2), in the tensioned state, slackens the first V-belt (7) via the pressure lever arm (19.2).

10. Ride-on mower according to one of the preceding Patent Claims 8 to 9, **characterized in that** the pressure lever arm (19.2) has on the tensioning lever side a roller (19.3) serving as a thrust bearing.

11. Ride-on mower according to the preceding Patent Claim 10, **characterized in that** the roller (19.3), and hence also the operating lever (17), in the coupled-up state of the mower deck (3), has no contact with the multiple V-belt pulley (9.2).

12. Ride-on mower according to one of the preceding Patent Claims 8 to 11, **characterized in that**:
12.1 the operating lever (17) is rotatable,
12.2 a first arm (18.1) of the toggle joint is articulately attached to the operating lever (17),
12.3 a second arm (18.2) of the toggle joint is articulately attached to the pressure lever arm (19.2),
12.4 a first latching mechanism (20.2) of the toggle joint (18.1, 18.2) is provided, in which the toggle joint (18.1, 18.2) engages as soon as the toggle lever decouples the cutting tools.

13. Ride-on mower according to the preceding Patent Claim 12, **characterized in that** a brake locking mechanism (24, 23.1-23.4) is provided, by which a vehicle brake, in the applied state, can be fixed by manual operation, the brake locking mechanism (24, 23.1-23.4) also having an actuating means (23.2), which actuates the spring-loaded rocker (22).

14. Ride-on mower according to the preceding Patent Claim 13, **characterized in that**:
14.1 the brake locking mechanism (24, 23.1-23.4) has a hand lever (24), which can pivot a pivotably mounted locking shaft (23.1) about a first eccentric (23.4), and
14.2 has on the locking shaft (23.1) a second eccentric (23.2), which, when the said brake locking mechanism is actuated, for the purpose of locking the vehicle brake, deflects the spring-loaded rocker (22) on one side counter to a spring force, so that the other side of the rocker (22) bolts the pressure lever arm (19.2).

## Revendications

1. Tondeuse à gazon à assise (1), présentant :
1.1. un moteur d'entraînement (2),
1.2. un capot de tondeuse (3) qui est entraîné directement ou par le biais d'une transmission par un arbre d'entraînement (4.1) avec une poulie à courroie trapézoïdale d'entraînement (4.2),
1.3. le capot de tondeuse (3) ayant au moins deux outils de coupe (5.2, 6.2, 11.2) tournant horizontalement autour d'un axe de coupe respectif (5.1, 6.1, 11.1), qui sont entraînés par la poulie à courroie trapézoïdale d'entraînement (4.2) par le biais d'un entraînement à courroie trapézoïdale (8, 5.3, 6.3, 11.3, 12, 13),
1.4. La poulie à courroie trapézoïdale d'entraînement (4.2) entraînant à l'aide d'une première courroie trapézoïdale (7) pouvant être tendue et détendue, une poulie à courroie trapézoïdale multiple (9.2),
1.5. un dispositif de serrage (10.1, 10.2) étant prévu, lequel peut déplacer la poulie à courroie trapézoïdale multiple (9.2) pour tendre la première courroie trapézoïdale (7) parallèlement à son axe de rotation (9.1),
1.6. au moins une deuxième courroie trapézoïdale (8) étant prévue, laquelle entraîne les au moins deux outils de coupe (5.2, 6.2) par le biais d'autres poulies à courroie trapézoïdale (5.3, 6.3), la deuxième courroie trapézoïdale (8) étant tendue de manière permanente également dans l'état désaccouplé par rapport à la poulie à courroie trapézoïdale d'entraînement (4.2),
**caractérisée en ce que**
1.7. un dispositif de freinage (14.1 - 14.3) agissant directement sur la poulie à courroie trapézoïdale multiple (9.2) étant prévu, lequel agit sur la poulie à courroie trapézoïdale multiple (9.2) dès que la poulie à courroie trapézoïdale multiple (9.2) se rapproche de la poulie à courroie trapézoïdale d'entraînement (4.2) pour détendre la première courroie trapézoïdale (7).

2. Tondeuse à gazon à assise selon la revendication précédente 1,
**caractérisée en ce que**
2.1 le dispositif de freinage présente un bloc de freinage (14.3) contre lequel, en cas de désaccouplement de l'entraînement, la poulie à courroie trapézoïdale multiple (9.2) est pressée,
2.2. le bloc de freinage (14.3) est appliqué sur un bras de levier (= bras de ressort à levier) (14.2) monté de manière élastique (14.4) et de manière excentrique autour d'un axe (14.1), et
2.3. le bloc de freinage (14.3) est disposé entre la poulie à courroie trapézoïdale multiple (9.2) et la poulie à courroie trapézoïdale d'entraînement (4.2).

3. Tondeuse à gazon à assise selon l'une quelconque des revendications précédentes 1 à 2, **caractérisée en ce que** dans la plage de roulement de la première courroie trapézoïdale (7), on prévoit des limitations (15.1, 15.2, 15.3) qui, dans l'état désaccouplé, empêchent un arrondissement et un saut de la première courroie trapézoïdale (7).

4. Tondeuse à gazon à assise selon la revendication précédente 3,
**caractérisée en ce qu'**une limitation se compose d'un arceau (15.3) qui entoure un secteur de la poulie à courroie trapézoïdale multiple (9.2) à la hauteur de la première courroie trapézoïdale (7).

5. Tondeuse à gazon à assise selon la revendication précédente 3,
**caractérisée en ce qu'**une limitation se compose d'au moins une goupille (15.1, 15.2) ou d'une tôle qui limite la région de roulement de la première courroie trapézoïdale (7) entre les poulies à courroie trapézoïdale (4.2, 9.2).

6. Tondeuse à gazon à assise selon l'une quelconque des revendications précédentes 1 à 5,
**caractérisée en ce que** le dispositif de serrage de la poulie à courroie trapézoïdale multiple (9.2) se compose d'un bras de levier (bras de levier de serrage) (10.2) qui est monté autour d'un axe de pivotement (10.1) de manière élastique en position excentrique par rapport à l'axe de rotation (9.1) de la poulie à courroie trapézoïdale multiple (9.2) et sur lequel est montée la poulie à courroie trapézoïdale multiple (9.2).

7. Tondeuse à gazon à assise selon la revendication précédente 6, **caractérisée en ce qu'**au moins un ressort (= ressort de serrage) (16) est articulé au bras de levier de serrage (10.2) de telle sorte que l'au moins un ressort de serrage (16) applique la tension nécessaire entre la poulie à courroie trapézoïdale d'entraînement (4.2) et la poulie à courroie trapézoïdale multiple (9.2) pour la première courroie trapézoïdale (7).

8. Tondeuse à gazon à assise selon l'une quelconque des revendications précédentes 6 à 7, **caractérisée en ce qu'**un levier de commutation (17) pour l'accouplement et le désaccouplement des au moins deux outils de coupe (5.2, 6.2) est prévu, lequel actionne une articulation à rotule (18.1, 18.2) qui vient en prise sur un autre bras de levier (= bras de levier de pression) (19.2) qui actionne le bras de levier de serrage (10.2).

9. Tondeuse à gazon à assise selon la revendication précédente 8, **caractérisée en ce que** l'articulation à rotule (18.1, 18.2), dans l'état tendu, détend la première courroie trapézoïdale (7) par le biais du bras de levier de pression (19.2).

10. Tondeuse à gazon à assise selon l'une quelconque des revendications précédentes 8 à 9, **caractérisée en ce que** le bras de levier de pression (19.2) présente, du côté du levier de serrage, un rouleau (19.3) servant de palier de pression.

11. Tondeuse à gazon à assise selon la revendication précédente 10, **caractérisée en ce que** le rouleau (19.3) et donc aussi le levier de sélection (17) dans l'état accouplé du capot de tondeuse (3) ne présentent aucun contact avec la poulie à courroie trapézoïdale multiple (9.2).

12. Tondeuse à gazon à assise selon l'une quelconque des revendications 8 à 11, **caractérisée en ce que** :
12.1. le levier de sélection (17) peut tourner,
12.2. un premier bras (18.1) de l'articulation à rotule est articulé au levier de sélection (17),
12.3. un deuxième bras (18.2) de l'articulation à rotule est articulé au bras de levier de pression (19.2),
12.4. un premier encliquetage (20.2) de l'articulation à rotule (18.1, 18.2) est prévu, dans lequel l'articulation à rotule (18.1, 18.2) s'encliquète, dès que le levier à rotule désaccouple les outils de coupe.

13. Tondeuse à gazon à assise selon la revendication précédente 12, **caractérisée en ce qu'**un blocage de freinage (24, 23.1 - 23.4) est prévu, lequel peut fixer un frein de véhicule actionné manuellement dans l'état serré, le blocage de freinage (24, 23.1 - 23.4) présentant aussi un moyen d'actionnement (23.2) qui actionne la bascule élastique (22).

14. Tondeuse à gazon à assise selon la revendication précédente 13, **caractérisée en ce que**
14.1. le blocage de freinage (24, 23.1 - 23.4) présente un levier à main (24) qui peut faire pivoter un arbre de blocage (23.1) monté de manière pivotante par le biais d'un premier excentrique (23.4), et
14.2. présente un deuxième excentrique (23.2) sur l'arbre de blocage (23.1), lequel, lors de l'actionnement de blocage du frein du véhicule, dévie la bascule élastique (22) d'un côté contre une force de ressort de sorte l'autre côté de la bascule (22) verrouille le bras de levier de pression (19.2).
